# EUROPEAN PATENT SPECIFICATION

(11) **EP 4 357 209 B1**
(45) Date of publication and mention of the grant of the patent: **22.10.2025**
(21) Application number: 22203042.1
(22) Date of filing: 21.10.2022
(51) Int. Cl.: B60T 13/74, F16D 55/226, F16D 65/18

(54) **ELECTROMECHANICAL BRAKE ACTUATOR FOR ELECTROMECHANICAL BRAKE ARRANGEMENT**
ELEKTROMECHANISCHER BREMSAKTUATOR FÜR EINE ELEKTROMECHANISCHE BREMSANORDNUNG
ACTIONNEUR DE FREIN ÉLECTROMÉCANIQUE POUR SYSTÈME DE FREINAGE ÉLECTROMÉCANIQUE

(43) Date of publication of application: 24.04.2024
(73) Proprietor: ZF CV Systems Global GmbH, 3006 Bern (CH)
(72) Inventor: BEIER, Peter, 31515 Wunstorf (DE); REINERS, Arne, 30173 Hannover (DE); KOWALSKI, Przemyslaw, 51-180 Wroclaw (PL)
(74) Representative: Ohlendorf, Henrike

(56) References cited:
- EP-B1- 0 974 506
- EP-B1- 2 566 734
- CN-B- 109 703 541
- US-A1- 2020 072 308

## Description

The present invention is directed to an electromechanical brake actuator, to an electromechanical brake arrangement and to a commercial vehicle.

Document US 20200062230 A1 describes an electromechanical brake actuator for a brake, in particular a commercial vehicle disc brake, which has an electric motor for generating a drive torque, a cam disc operatively connected to the electric motor and mounted in a rotationally movable manner, and a brake plunger or rod which can be moved along a plunger axis for the actuation of a brake lever of the brake.

Document EP 2 566 734 B1 discloses an electromechanical brake actuator comprising a service-brake unit with a service-brake rod and a parking-brake unit with a parking-brake rod, which is operatively coupled to the service-brake rod and movable between a first position in which the parking-brake rod is arranged to lock the service-brake rod in a braking position and a second position in which the service-brake rod is released from the braking position, the parking-brake rod being locked at a given position and released from a given position by an electric motor.

Documents US 2020/072308 A1, EP 0 974 506 B1 and CN 109 703 541 B disclose further electromechanical brake actuators, where a parking-brake rod is locked by the use of an electromagnetic unit.

It would be beneficial to increase the functionality of electromechanical brake actuators.

A first aspect of the present invention is formed by an electromechanical brake actuator that comprises a service-brake unit and a parking-brake unit. The service-brake unit includes a service-brake rod for applying a variable braking force to an external caliper, in particular of a brake arrangement. The service-brake unit also comprises a service-actuation unit that configured to receive a service-brake signal and, in dependence thereof, to move the service-brake rod to a position between a full braking position at which a maximum braking force is applied to the caliper and a drive position, at which a minimum braking force, and in particular no braking force, is applied to the caliper.

The parking-brake unit includes a parking-brake rod that is operatively coupled to the service-brake rod and is movable between a first position in which the parking-brake rod is arranged to lock the service-brake rod in a braking position, preferably the full-braking position, and a second position in which the service-brake rod is released from the braking position and free to be moved by the service-actuation unit. The parking-brake unit also includes a parking-actuation unit comprising a spring element that is operatively coupled to the parking-brake rod and arranged so that in a fully-compressed state of the spring element, the parking-brake rod is in the second position, and in a fully-released state of the spring element the parking-brake rod is in the first position. The parking-actuation unit further comprises a hydraulic unit that is operatively coupled to the parking-brake rod and configured to receive a parking-brake signal and, in dependence thereof, to lock the parking brake rod at a given current position and to allow a release of the spring element to the released state.

Thus, the electromechanical brake actuator comprises a service brake rod that is configured to apply a variable braking force to a caliper in dependence on a service-brake signal that is received by the service-actuation unit. The service-brake rod has a stroke length delimited by two end positions, namely the full braking position and the drive position, and the braking force applied to the caliper varies in dependence on the position. In particular, the braking force increases monotonically from a minimum braking force, preferably a vanishing force, when the service-brake rod is in the drive position, and a maximum braking force when the service-brake rod is at the full braking position. When the service-actuation unit drives the service-brake rod to an intermediate position, i.e. a position between the full braking position and the drive position, a braking force amount with a value between the maximum braking force and the minimum braking force is applied to the caliper. The electromechanical actuator also comprises a parking-brake rod. The parking-brake rod is operatively coupled to the service-brake rod, i.e., that operation of the parking-brake rod has an effect on the operation of the service brake rod. The parking brake rod is operatively coupled and actuated by a spring element, such that a change in the state of the spring element is directly coupled to a change in the position of the parking-brake rod. In a fully compressed state, the spring element drives the parking brake rod to be in the second position, which allows the service-brake rod to be moved by the service-actuation unit. When the spring element is in the fully released state, the parking-brake rod is at the first position. In this position, the parking-brake rod is configured to actuate on the service-brake rod and to force and lock the latter in a braking position, preferably the full-braking position, irrespectively of the service-brake signal. The braking position is a position in which a braking force necessary for a parking-brake function is applied to the caliper. This braking position preferably but not necessarily corresponds to the full-braking position. A position of the parking-brake rod between the first and the second position is correlated to the spring element being in a semi-compressed state. The spring element states, e.g. fully compressed or fully-released are understood as the states of the spring element when used in the brake actuator and may differ from the states of the spring when considered alone. There might be mechanical restrictions imposed by other elements of the brake actuator limiting the intrinsic expansion or compression capabilities of the spring element. The state of the spring element and thus the position of the parking brake rod is controlled by the hydraulic unit, which is operatively coupled to the parking-brake rod. The hydraulic unit is configured to receive the parking-brake signal and, in dependence thereof, to lock the parking brake rod at any given position along the stroke length of the parking-brake rod. Also in dependence on the parking-brake signal, the hydraulic unit is configured to allow a movement of the parking-brake rod, which is caused by the spring element being free to adopt the fully released state, which causes the parking-brake to move to the second position forcing the service-brake rod in the full braking position. The brake actuator of the first aspect of the invention is thus a combined electromechanical brake actuator that enables a service-braking function and a parking-braking function which can be implemented without a pneumatic system.

In the following, developments of the electromechanical brake actuator of the first aspect of the invention will be described.

In a development, the service-brake rod and the parking-brake rod are arranged longitudinally along a common longitudinal direction. Preferably, a stroke length amount of the service-brake rod, i.e. a distance between the full braking position and the drive position is substantially identical in magnitude to a stroke length amount of the parking-brake rod, i.e. a distance between the first position and the second position.

In a preferred development, the service-actuation unit, when driving the service-brake rod to the drive position, also drives the parking-brake rod to the second position. Upon reaching the second position, the hydraulic unit is configured to lock the position of the parking-brake rod. Thus, the service-actuation unit is further arranged and configured to compress the spring element thereby driving the parking-brake rod to the second position.

In a preferred development, the service-brake signal and the parking brake signal are electrical signals provided to the service-actuation unit and to the parking-actuation unit respectively. In some developments a lack of voltage/current is also interpreted as an electric signal that controls the operation of the service-actuation unit and/or of the parking actuation unit. For example, in a development, when the service-brake signal drops to 0 V or 0 A, the service-actuation unit is configured to control a movement of the service-brake rod to the drive position. In another development, when the parking-brake signal drops to 0 V or 0 A, the parking-actuation unit is configured to allow a release of the spring element to the fully-released state.

In another development, the hydraulic unit comprises a hydraulic cylinder including a piston chamber and a piston arranged inside the piston chamber. The piston is operatively coupled to the parking-brake rod. The hydraulic unit further comprises a first chamber and a second chamber in fluid communication with the first chamber via a fluid passage. An electrically controlled valve unit is configured to receive the parking-brake signal and is arranged and configured to block and enable a flow of an hydraulic fluid via the fluid passage between the first chamber and the second chamber. The first chamber, the second chamber and the fluid passage between them thus form a closed system such that when the fluid passage is closed, the piston is forced to stay at its current position, which also locks the parking-brake rod in its current position, even against the spring forced exerted by the spring element in a semi-compressed state or a fully-compressed state. When the fluid passage is open, the hydraulic fluid may travel between the chambers and the piston is free to move. The spring element adopts the released state moving the parking-brake rod to the first position locking the service brake rod at the braking position, preferably the full-braking position.

Preferably the hydraulic system is a closed system without any oil-line to an exterior of the electromechanical brake actuator or with only a filling port for filling oil into the hydraulic system.

In a development, the hydraulic cylinder is a double acting cylinder. In the double acting cylinder, the first chamber and the second chamber are located inside the double acting cylinder and separated by the piston. A double acting cylinder is a cylinder in which the working fluid, e.g. the hydraulic fluid, acts alternately on both sides of the piston. In order to connect the piston in a double-acting cylinder to the parking-brake rod, acting as a crank shaft, a hole is provided in one end of the cylinder for the parking-brake rod, and this is fitted with a sealing element to prevent escape of the working fluid.

Alternatively, in another development, the hydraulic cylinder is a single-acting cylinder, wherein the first chamber is located inside the hydraulic cylinder and the second chamber is a reservoir arranged outside the hydraulic cylinder. A single acting cylinder is a cylinder in which the working fluid acts on one side of the piston only. A single acting cylinder typically relies on the load, springs, vacuum, other cylinders, the momentum of a flywheel or any other suitable unit, to push the piston back in the other direction.

In a preferred development the electronically controlled valve unit comprises a manifold valve, in particular a solenoid valve, preferably a 2/2-way solenoid valve. The manifold valve is operable in a first state in which a first port of the manifold valve, which is in fluid communication with the first chamber, is disconnected from a second port of the manifold valve, which is in fluid communication with the second chamber. Thus, in the first state a movement of the piston inside the hydraulic cylinder is hindered. The manifold valve is further operable in a second state in which the first port is connected to the second port and therefore a movement of the piston inside the hydraulic cylinder is enabled. In particular, the piston is free to move, by action of the spring element adopting the released state, to a position that brings the parking-brake rod to the first position. This activates the parking-brake function of the brake actuator. Also, the piston is free to move in response to the service-actuation unit driving the service-brake rod to the drive position, which in turn causes the parking-brake rod to move to the second position. Once in this position, and upon reception of a suitable parking-brake signal, the manifold valve closes the fluid passage and the piston (und thus the parking-brake rod) is locked in said second position.

In a preferred embodiment, the first state is an actuated state of the manifold valve, in particular od the 2/2-way solenoid valve, and the second state is an unactuated state of the manifold valve, in particular the 2/2-way solenoid valve. Thus, the manifold valve is operated as a NO valve. This has the advantage that an electrical signal is needed to lock the spring element in the fully-compressed state, allowing a normal operation of the service-braking function based on the electric service-brake signal. Should be a failure in the electric system, which may affect the service-brake functionality, the parking-brake signal is no longer provided, which automatically triggers the parking-brake functionality. Further, the parking-brake functionality can only be ended if energy supply is present for actuating the manifold valve and, optionally, for operating the service-actuation unit.

In another development, the manifold valve is a bi-stable manifold valve wherein a provision of a short pulse as the parking-brake signal is configured to actuate the manifold valve and change the operation state from the first to the second state and vice versa.

In another development, the hydraulic unit alternatively or additionally comprises a flow-control unit arranged between the electrically controlled valve unit and the hydraulic cylinder for controlling a flow amount between the first chamber and the second chamber. Preferably, the flow-control unit is a throttle valve or a restrictor. Preferably, the flow-control unit is further configured to switch between two flow resistances values. In particular, in a development, the flow-control unit is configured to set a first flow resistance value to a first flow path from the first chamber to the second chamber and a second flow resistance value to a second flow path from the second chamber to the first chamber. This development enables a slow relaxation of the spring element to the released state, which correlates to an engagement of the parking brake, and a faster (compared to the relaxation) tensioning of the spring element, which correlates to a release of the parking brake.

In a preferred development, which may include any of the technical features described above, the hydraulic unit further comprises an emergency-release unit that is operatively coupled to the parking-brake rod and configured to drive the parking-brake rod to the second position independently of the service-actuation unit.

In a particular development, the emergency-release unit comprises an emergency-release screw, preferably for manual actuation, for moving the parking-brake rod. Preferably, in addition, the emergency-release unit also comprises a manual valve actuator for controlling the hydraulic unit independently of the electric parking-brake signal. In a development, the piston is operatively coupled to a threaded screw which is coupled to a cooperating nut that is manually or mechanically or otherwise drivable. Rotating the threaded nut causes the screw to move relative to the nut, which in turn drives the piston and also drives the parking-brake rod to the second position, compressing the spring element. This type of emergency-release unit can be used to bring the piston to virtually any reachable position within the piston chamber. However, the main functionality is to compress the spring element and so that the service-brake rod is no longer locked in the (full) braking position. Optionally, in a development wherein the movement of the piston is blocked by the hydraulic unit in these circumstances, a manual valve actuator for controlling the hydraulic unit is provided, which, independently on the provision of the parking-brake signal, is configured to allow a free movement of the piston, for instance, by enabling a fluid communication between the first and the second chamber.

A second aspect of the present invention is formed by an electromechanical brake arrangement. The electromechanical brake arrangement comprises an electromechanical brake actuator according to the first aspect of the present invention.

The inventive electromechanical brake arrangement also comprises a caliper operatively coupled to the service-brake rod and configured to apply the braking force to a brake disk. The amount of the braking force is dependent on a position of the service-brake rod, as explained above. The electromechanical brake arrangement also comprises a brake control unit that is in signal communication with the service-actuation unit and with the parking-actuation, preferably via a CAN bus or a dedicated wired or wireless connection, and configured to generate and provide the service-brake signal and the parking-brake signal to the service-actuation unit and to the parking-actuation unit respectively.

The electromechanical brake arrangement of the second aspect of the invention thus shares the advantages of the electromechanical brake actuator of the first aspect or of any of its developments.

A third aspect of the present invention is formed by a commercial vehicle, in particular an electric commercial vehicle, comprising an electromechanical brake arrangement according to the second aspect of the invention. In the inventive commercial vehicle, a respective brake disk is connected to a corresponding wheel of the vehicle.

The commercial vehicle of the third aspect of the invention thus shares the advantages of the electromechanical brake actuator of the first aspect and/or of the electromechanical brake arrangement of the second aspect of any of their developments.

### Beschreibung, Seite 9 (Reinschrift)

These and other aspects of the invention will be apparent from and elucidated with reference to the embodiments described hereinafter.

The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regards to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

The following drawings show in:
- Fig. 1.: A schematic block diagram of an inventive electromechanical braking system including an electromechanical brake actuator according to a first embodiment of the invention;
- Fig. 2A: A schematic block diagram of a hydraulic unit for use in an electromechanical brake actuator in accordance with the invention;
- Fig. 2B: A schematic block diagram of an alternative hydraulic unit for use in an electromechanical brake actuator in accordance with the invention;
- Fig. 3: A cross sectional view of an electromechanical brake actuator according to a second embodiment of the invention;
- Fig. 4: A cross sectional view of an electromechanical brake actuator according to a third embodiment of the invention; and
- Fig. 5: A schematic block diagram of an inventive commercial vehicle according to an embodiment of the invention.

There are known combined emergency-brake and parking brake actuator for air disc brakes. In addition to a service chamber for service brake actuation, there is an additional parking chamber for the parking brake actuation. A spring is placed in this chamber. For normal usage of service brake, pressure is applied to the parking chamber. The spring is compressed, hence no spring-force is applied on the pushrod. A clamping or braking force is generated by pressurizing the service chamber. Without pressure applied on the parking chamber, spring expand and generates a clamping force onto the pushrod. This functionality can be used for an emergency brake and park brake functionality: The spring will apply brake forces without any pressuring / energy supply to any of the chambers. In addition to that an emergency release functionality is integrated. In case of failure or service the spring can be compressed manually. A nut can be fasten in order to compress the spring. By this the brake is released manually.

The electromechanical brake actuator of the invention offers an increased functionality similar to that of air-disc brakes, without the need to use a pneumatic system.

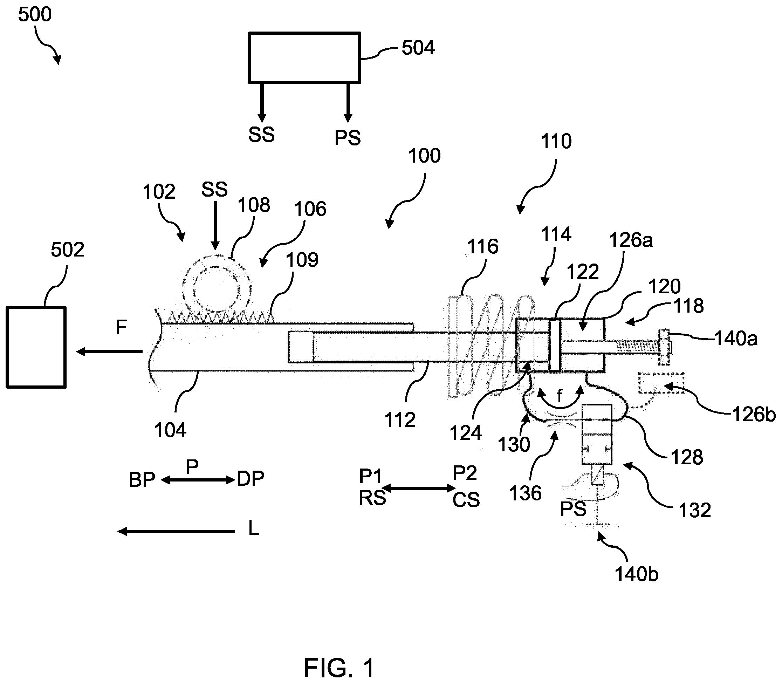

Fig. 1 shows a schematic block diagram of an inventive electromechanical braking system 500 including an electromechanical brake actuator 100 operatively coupled to a caliper 502 and controlled by a brake control unit 504.

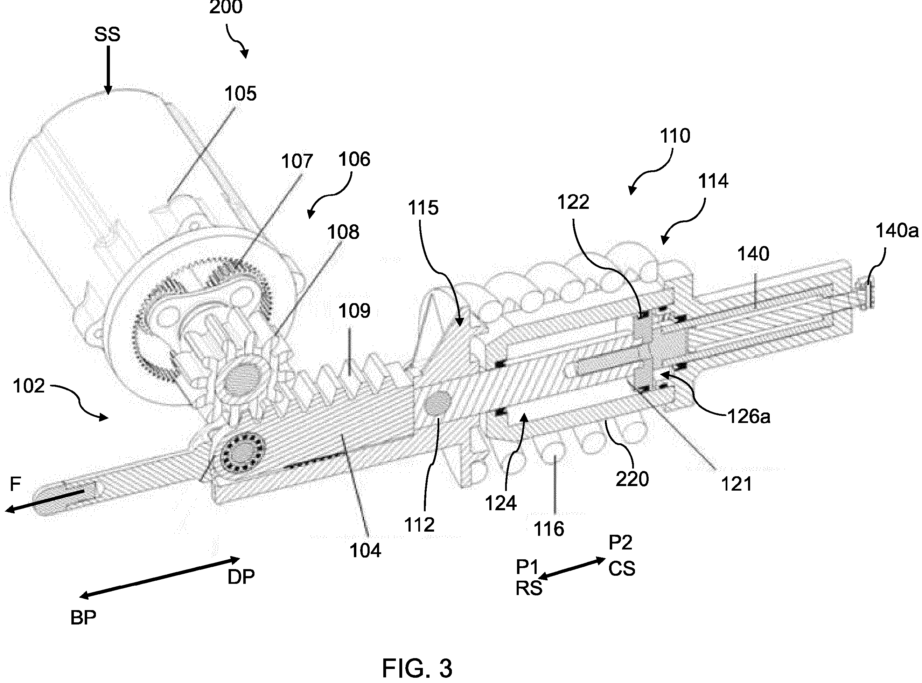

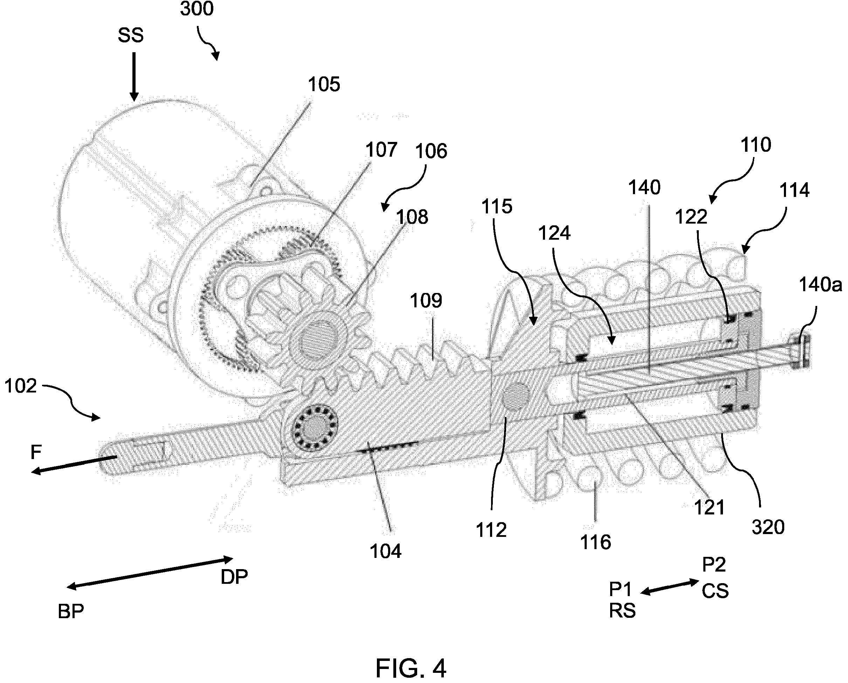

The electromechanical brake actuator 100 comprises a service-brake unit 102 and a parking-brake unit 110. The service-brake unit 102 comprises a service-brake rod 104 arranged and configured to apply a variable braking force F to the caliper. The service-brake rod 104 is actuated by a service-actuation unit 106 that is configured to receive a service-brake signal SS from the brake control unit and in dependence thereof, to move the service-brake rod 104 to a corresponding position P between a full braking position BP and a drive position DP. The full braking position is that position P at which a maximum braking force Fmax is applied to the caliper 502 and the drive position DP, at which a minimum, preferably no braking force F, is applied to the caliper 502. The service-actuation unit 106 my include a pinion-and-rack system for moving the service-brake rod 104. For instance, a rack element 109 is attached to the service-brake rod 104 and a pinion 108, driven for example by an electromotor (see Figs. 3 or 4), is used to move the service-brake rod to the intended position indicated by the service-brake signal SS. The service-brake signal SS may for instance depend on a duration during which a braking pedal is pressed by the driver and/or on a force amount applied to the braking pedal. When the pressure or force amount applied to the pedal is reduced, the service-actuation unit moves the service-brake rod 104 towards the drive position DP and the amount of braking force applied F to the caliper 502 is reduced.

The electromechanical brake actuator 100 also includes a parking-brake unit, which comprises a parking-brake rod 112 and a parking-actuation unit 114. The parking-brake rod 112 is operatively coupled to the service-brake rod 104 and it is movable between a first position P1, in which the parking-brake rod 112 is arranged to lock the service-brake rod 104 in a braking position, preferably the full braking position BP, and a second position P2 in which the service-brake rod 104 is released from the braking position BP and free to be moved by the service-actuation unit 106. Thus, when the parking-brake rod 112 is in the second position P2, the service-brake rod 104 is free to be moved by the service-actuation unit 106 to any position P between the full-braking position BP and the drive position DP. When the parking-brake rod 112 is in the first position P1, the service-brake rod 104 is forced to be at the braking position, which is preferably the full-braking position BP. In this case, the service-brake rod 104 cannot be moved by the service-actuation unit. In embodiments where the braking position at which the service-brake rod 104 is forced when the parking-braking rod 112 is in the first position P1 is not the full-braking position FB, the service-braking rod may be movable by the service-actuation unit 106 to any position between the full braking position FB and the braking position. The service-actuation unit 106 is optionally further arranged and configured to compress the spring element 116 and to drive the parking-brake rod 112 to the second position P2.

In Fig. 1 the service-brake rod 104 and the parking-brake rod 112 are arranged longitudinally along a common longitudinal direction L. However, in alternative embodiments (not shown), the service-brake rod 104 is arranged in a direction different from a direction in which the parking-brake rod 112 is aligned.

The parking-brake unit 110 also comprises a parking-actuation unit 114 for actuating the parking-brake rod 112. The parking-actuation unit 114 comprises a spring element 116 that is operatively coupled to the parking-brake rod 112. The spring element 116 is arranged so that in a fully-compressed state CS of the spring element 116, the parking-brake rod 112 is in the second position P2, and in a fully-released state RS of the spring element 116, the parking-brake rod 112 is in the first position P1. The parking-actuation unit 114 further comprises a hydraulic unit 118 that is operatively coupled to the parking-brake rod and configured to receive a parking-brake signal PS, for instance, from the brake control unit 504, for example in response to the driver actuating a parking-brake interface (not shown). In dependence on the received parking-brake signal PS, the hydraulic unit 118 is configured to lock the parking-brake rod 112 at a given current position, or to allow a release of the spring element 116 to the released state RS.

In the exemplary electromechanical brake actuator 100, the hydraulic unit 118 comprises a hydraulic cylinder 120 including a piston chamber (121, see Fig. 3 or 4) and a piston 122 that is arranged inside the piston chamber 121. The piston 122 is operatively coupled to the parking-brake rod 112. The hydraulic unit 118 further comprises a first chamber 124 and a second chamber. In a particular embodiment, as shown in Fig. 1, the second chamber 126a is inside the piston chamber 121. In an alternative embodiment, shown in Fig. 1 with a dotted line, the second chamber 126b is located outside the piston chamber 121. Thus, in the former case, the hydraulic cylinder 120 is a double acting cylinder wherein the first chamber 124 and the second chamber 126a are located inside the piston chamber 121 and separated by the piston 122. In the latter case, the hydraulic cylinder 120 is a single-acting cylinder, wherein the first chamber 124 is located inside the hydraulic cylinder 120 and the second chamber 126b is arranged outside the hydraulic cylinder 120.

The first chamber 124 and the second chamber 126a, 126b are in fluid communication via a fluid passage 128. An electrically controlled valve unit 132 is configured to receive the parking-brake signal PS and it is arranged and configured to control, i.e., to block and enable, a flow f of a hydraulic fluid 130 via the fluid passage 128 between the first chamber 124 and the second chamber 126a, 126b.

Typically the first chamber 124, whose volume depends on the position of the piston 122 is filled with hydraulic fluid, such as oil or any other suitable fluid. When the parking-brake rod 112 is moved from in the direction of the second position P2 (for example actuated by the service-actuation unit 106 via the service-brake rod 104), the volume of the first chamber 124 increases and hydraulic fluid 130 is drawn from the second chamber 216a, 126b for filling the added volume. This is possible only if the hydraulic unit 118 is in a state where a flow f through the fluid passage 128 is enabled. If not, the piston 122 will substantially remain at its position and the parking-brake rod 112 will practically not move in either direction, not even by the force exerted by the spring element 116. The amount of movement possible is given by the compressibility of the hydraulic fluid 130.

If the state of the hydraulic unit 118 changes and a flow f between the first chamber 124 and the second chamber 126a, 126b is enabled, the spring element 116 will be released towards its released state RS, driving the parking-brake rod 112 towards the first position P1 (and therefore the service-brake rod towards the (full) braking position). The volume of the first chamber will be reduced because the piston 122 is indirectly driven (i.e. by means of the parking-brake rod 112) by the spring element 116. The hydraulic fluid f flows out of the first chamber 124 and into the second chamber 126a, 126b.

Optionally, the hydraulic unit 118 comprises a flow-control unit 136, for instance a throttle valve or a restrictor, that is arranged between the electrically controlled valve unit 132 and the hydraulic cylinder 120 and configured to control the flow amount f between the first chamber 124 and the second chamber 126a, 126b.

Also optionally, the hydraulic unit 118 further comprises an emergency-release unit 140 that is operatively coupled to the parking-brake rod 112 and configured to drive the parking-brake rod 112 to the second position P2 independently of the service-actuation unit 106. In this particular example, the emergency-release unit 140 comprises an emergency-release screw 140a for moving the parking-brake rod 112 and, optionally, a manual valve actuator 140b for controlling the hydraulic unit 118 independently of the electric parking-brake signal PS. For example, in the case of power loss, the electrically controlled valve unit 132 switches to an operating state in which a fluid communication between the first chamber 124 and the second chamber 126a, 126b is enabled. The compressed spring element 116 is then free to expand towards the fully-released stated RS, the parking-brake rod is moved towards the first position and the service-brake rod is locked at the (full) braking position BP. Since there is no power, the service-actuator unit 106 cannot operate the service-brake rod 104 towards the drive position DP. Should a user want to liberate the service-brake rod, he or she has the possibility to use emergency-release unit 140, for instance by actuating the emergency-release screw 140a to draw the parking-brake rod from the first position P1 towards the second position P2.

In cases where the electrically controlled valve unit 132 blocks a fluid connection between the first chamber 124 and the second chamber 126a, 126b, the electrically controlled valve unit 132 may comprise a manual valve actuator 140b for controlling the hydraulic unit 118 independently of the electric parking-brake signal PS. Thus the state of the valve unit 132 can be also manually controlled to allow operation of the emergency-release unit.

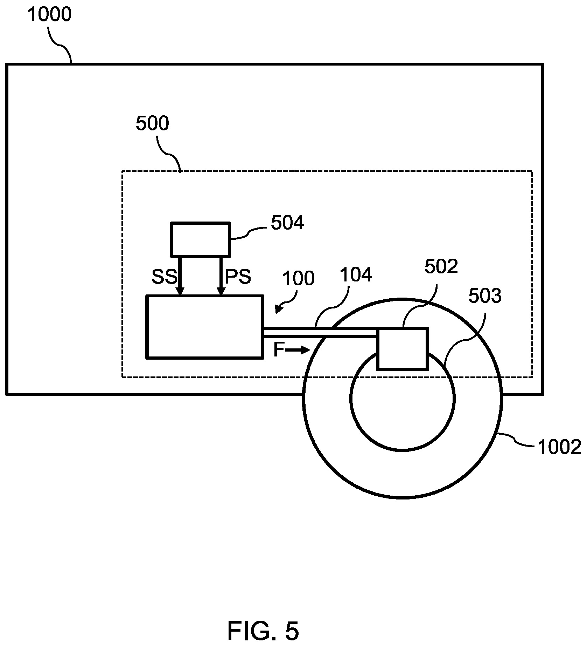

In the electromechanical brake arrangement 500 of Fig. 1, the caliper 502 is connected to the service-brake rod 104 and configured to apply the braking force F to a brake disk of a vehicle (see Fig. 5). The amount of the braking force F depends on a current position P of the service-brake rod 104.

The brake control unit 504 is in signal communication with the service-actuation unit 106 and the parking-actuation 114 and configured to generate and provide the electric service-brake signal SS and the electric parking-brake signal PS to the service-actuation unit 106 and the parking-actuation 114 respectively.

Thus, Fig. 1 shows an exemplary electromechanical brake actuator 100 with a linear gear type (rack 109 and pinion 108 gear type for braking force F generation). The output shaft, i.e. a distal end of the service-brake rod 104, is designed to fulfill a linear movement along the longitudinal direction L in order to apply the braking force F, for instance, to a conventional brake caliper 502, known from former air disc brake. The combined parking brake functionality 112/114 is shown on the right-hand side of Fig. 1.As known for conventional air disc brakes, parking and emergency brake forces are generated via a spring and an additional parking brake pushrod, here referred to as parking-brake rod 112.

This pushrod 112 is connected to a hydraulic unit 114 with a hydraulic cylinder 120. The cylinder 120 is controlled by the brake control unit 504 which provides a parking-brake signal PS, for controlling the spring element 116 and the valve unit 132. In order to release the parking brake, the spring is to be compressed, for example via the service-actuation unit 106. To achieve this, valve unit 132 is to be switched to "open"-state. Afterwards, the service-actuation unit is used to move both pushrods to the right-hand side end-position, namely the drive position DP in the case of the service-brake rod and the second position P2 in the case of the parking-brake rod 112. Due to this actuation via service-actuation unit, this parking brake mechanism does not need a dedicated energy supply. Once the end-positions are reached, namely the drive-position DP and the second position P2, valve is to be switched to "close"-state. For parking brake functionality, a "normal open" valve (NO) is advantageous: In case of loss of supply of the actuator, the valve unit 132 will open automatically. The spring element 116 is released, and the braking force F is applied via spring element 116. Depending on applied safety case "normal close" and bi-stable valves units can be applied, too. The optional throttle valve 136 enables a smooth controlled movement of the parking-brake rod 112. A mechanism for emergency release 140 can be placed on the same parking-brake rod 112. Depending on valve type and failure mechanisms, a manual actuator 140b for the valve unit 132 can be provided. This is used to prevent a hydraulically locking of piston cylinder 120 whilst manual emergency release via known screw mechanism.

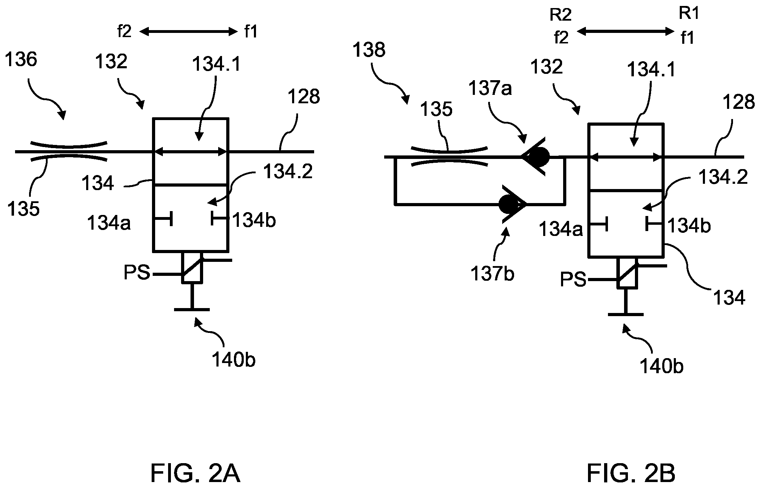

Fig. 2A and Fig. 2B show respective pneumatic diagrams of a hydraulic unit for use in an electromechanical brake actuator in accordance with the invention. The following discussion will be focused on those technical features that have not been discussed with respect to the hydraulic unit 118 of Fig. 1. The same reference numbers are used for those technical features that have an identical or similar function. The electrically controlled valve unit 132 of Figs. 2A and 2B comprises a manifold valve 134, namely a 2/2-way solenoid valve 134. The 2/2-way solenoid valve is operable in a first state 134.1 in which a first port 134a of the manifold valve 134 that is in fluid communication with the first chamber 124 (see Fig. 1) is disconnected from a second port 134b of the manifold valve 134 that is in fluid communication with the second chamber 126a, 126b (see Fig. 1). Therefore, in the first state 134.1, a movement of the piston 122 inside the hydraulic cylinder 120 is hindered (see Fig. 1). The 2/2-way solenoid valve is also operable in a second state 134.2, in which the first port 134a is connected to the second port 134b and therefore a movement of the piston 122 inside the hydraulic cylinder 120 is enabled (see Fig. 1). In particular, the first state 134.1 is an unactuated state of the manifold valve 134 and the second state 134.2 is an actuated state of the manifold valve 134. This is advantageous because in case of a power failure, the manifold valve 134 will be automatically operated in the unactuated state thereby triggering the parking-brake functionality by driving the service-brake rod 104 to the (full) braking position BP.

Further, the manifold valves 134 of Fig. 2A and Fig. 2B are connected to a respective flow-control unit 136, 138, arranged between the electrically controlled valve unit 132 and the hydraulic cylinder 120. The flow-control unit 136, 138 are configured to control a flow amount f1,f2 between the first chamber 124 and the second chamber 126a, 126b. In Fig. 2A, the flow control unit 136 is a throttle valve or restrictor 135. In Fig. 2B, the flow control unit 138 is further configured to switch between two flow resistances values R1, R2. In particular, the flow-control unit 138 is configured to set a first flow resistance value R1 to a first flow path f1 from the first chamber 124 to the second chamber 126a, 126b and a second flow resistance value R2 to a second flow path f2 from the second chamber 126a, 126b to the first chamber 124. The flow-control unit 138 comprises a first branch with a check valve 137a for blocking a flow f2 from the second chamber 126a, 126b to the first chamber 124 and a throttle valve 135 to limit said flow f2 and a second branch with a check valve 137b for blocking a flow f1 from the first chamber 124 to the second chamber 126a, 126b. Thus, the flow rates f1 and f2 are different, enabling, for example, a slower relaxation of the spring element 116 to the released state RS, which correlates to an engagement of the parking brake, and a faster (compared to the relaxation) tensioning of the spring element 116, which correlates to a release of the parking brake.

Thus, this particular mechanism can be used as a self-clamping parking brake. i.e. a parking brake designed to apply brake force to the caliper in case of power loss in the braking system.

In another embodiment (not shown), the electrically controlled valve unit comprises a bi-stable valve, wherein a parking-brake signal in the form of a pulse triggers a change in the state of the valve, which remains in said state until another pulse is provided, or, in a particular embodiment, a manual valve actuator is operated.

Fig. 3 shows a cross sectional view of an electromechanical brake actuator 200 according to a second embodiment of the invention. The following discussion will be focused on those technical features that have not been discussed with respect to the electromechanical brake actuator 100 of Fig. 1. The same reference numbers are used for those technical features that have an identical or similar function. The service-brake unit 102 comprises an electromotor 105 configured to receive the service-brake signal SS, and, in dependence thereof to operate a set of gears 107 for turning a pinion 108 which cooperates with a linear rack 109 arranged on the service-brake rod 104. By operating the electromotor, the service-brake rod can be moved to any position between a full braking position BP and a drive position DP, each of which is correlated to a maximum and a minimum (particularly a vanishing) braking force F that can be applied to a caliper.

A parking-brake rod 112 is operatively coupled to the service brake rod 104. It also comprises a support element 115 that is arranged and configured to support the spring element 116 and to compress the spring element 116 when the parking-brake rod moves towards the second position P2.

In the electromechanical brake actuator 200 of Fig. 4. the hydraulic cylinder is a double acting cylinder 220, wherein the first chamber 124 and the second chamber 126a are located inside the double acting cylinder 220 and separated by the piston 122 that is arranged within the piston chamber 121.

Alternatively, Fig. 4 shows A cross sectional view of an electromechanical brake actuator according to a third embodiment of the invention. The following discussion will be focused on those technical features that have not been discussed with respect to the electromechanical brake actuators 100 and 200 of Fig. 1, and Fig. 2 respectively. The same reference numbers are used for those technical features that have an identical or similar function. In the case of the exemplary electromechanical brake actuator 300, the hydraulic cylinder is a single-acting cylinder 320, wherein the first chamber 124 is located inside the hydraulic cylinder 120 and the second chamber (not shown) is arranged outside the hydraulic cylinder 120. The second chamber is, in a particular embodiment, a reservoir.

Fig. 3 and Fig. 4 show two different embodiments of the inventive electromechanical brake actuator. The electromechanical brake actuator 200 provides a parking brake mechanism using double acting cylinder 220. For best usage of available space, the cylinder 220 is preferably integrated into the spring housing. The electromechanical brake actuator 300 of Fig. 4 provides a parking brake mechanism using single-acting cylinder 320. In this embodiment there is only one pressured hydraulic chamber inside the hydraulic cylinder 320. The design of actuator is simplified and it also allows the integration of emergency release mechanics. As an advantage, the size of the electromechanical brake actuator can be reduced. However, an additional second chamber, such as reservoir, is to be provided, for instance, integrated in the housing.

In a particular embodiment (not shown) the elements of the flow control unit, optionally including the electrically controlled valve unit are integrated into a housing of the spring element.

Before service brake can be applied, parking brake mechanism, also referred to as emergency brake is to be put in operation. As described above, for state of no energy supply, the spring element 116 is its fully-released state RS and thus expanded. Brake is clamped since a braking force F is applied to the caliper via the service-brake rod 105. To release the brake, the valve unit 132 is switched to "open" state, the service-brake rod 104 is moved to right-hand end position, i.e., towards the drive position by the service-actuation unit 106 which drives the parking-brake rod 112 towards the second position P2. Once end positions DP, P2 are reached, the valve unit is switched to "close" state.

Fig. 5 shows a schematic block diagram of an inventive commercial vehicle 1000 according to an embodiment of the invention. The commercial vehicle 1000, in particular an electric commercial vehicle, comprises an electromechanical brake arrangement 500, such as the electromechanical brake arrangement discussed with reference to Fig. 1. In the commercial vehicle 1000, a respective brake disk 503 is connected to a corresponding wheel 1002 of the vehicle 1000. The caliper 502 is actuated by the service-brake rod 104, which is configured to transfer a variable braking force F to the caliper 502, and thus to the brake disc 503.

While the service-actuation unit drives the service-brake rod 104 and the parking-brake rod 112 to their respective final positions DP, P2, i.e. while the spring element is being forced towards the fully-compressed state, no controlled brake force F can be applied to the wheels 1002, which can cause heavy safety issues. To avoid this, it is preferred that the wheels are to be put in operation sequentially. Starting at one wheel-end or two wheel-ends per axle the process explained above is applied. After completed, a brake force shall be applied to that particular wheel or wheel-end via service brake functionality. Now a first axle is in operation. Afterwards the same process can be applied to the next axle until all wheel-ends are in operation.

In summary, the present invention is directed to an electromechanical brake actuator configured to move a service-brake rod between a full-braking position and a drive position. A parking-brake rod is coupled to the service-brake rod and movable between a first position for locking the service-brake rod in the full-braking position, and a second position where the service-brake rod is free to be moved. A spring element is coupled to the parking-brake rod and arranged so that in a fully-compressed state the parking-brake rod is in the second position, and in a fully-released state, the parking-brake rod is in the first position. A hydraulic unit is operatively coupled to the parking-brake rod and configured, in dependence on a parking-brake signal, to lock the parking-brake rod, and to allow a release of the spring element to the fully-released state.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### Reference numbers (Part of the description)

- 100: Electromechanical brake actuator
- 102: Service-brake unit
- 104: Service-brake rod
- 105: Electromotor
- 106: Service-actuation unit
- 107: Gears
- 108: Pinion
- 109: Rack element; linear rack
- 110: Parking-brake unit
- 112: Parking-brake rod
- 114: Parking-actuation unit
- 115: Support element
- 116: Spring element
- 118: Hydraulic unit
- 120: Hydraulic cylinder
- 121: Piston chamber
- 122: Piston
- 124: First chamber
- 126a: Second chamber; double acting cylinder
- 126b: Second chamber; single acting cylinder
- 128: Fluid passage
- 130: Hydraulic fluid
- 132: Electrically controlled valve unit
- 134: Manifold valve; 2/2- way solenoid valve
- 134.1: First state of manifold valve
- 134.2: Second state of manifold valve
- 134a: First port of manifold valve
- 134b: Second port of manifold valve
- 135: Throttle valve; restrictor
- 136: Flow-control unit
- 137a: Check valve
- 137b: Check valve
- 138: Flow-control unit
- 140: Emergency-release unit
- 140a: Emergency-release screw
- 140b: Manual-valve actuator
- 200: Electromechanical brake actuator
- 220: Double acting cylinder
- 300: Electromechanical brake actuator
- 320: Single acting cylinder
- 500: Electromechanical braking system
- 502: Caliper
- 503: Brake disc
- 504: Brake control unit
- 1000: Commercial vehicle; electric commercial vehicle
- 1002: Wheel
- BP: Full braking position of service-brake rod
- CS: Fully compressed state of spring element
- DP: Drive position of service-brake rod
- f: flow
- f1: first flow
- f2: second flow
- F: Braking force
- Fmax: Maximum braking force
- L: Longitudinal direction
- P: Position
- P1: First position of parking-brake rod
- P2: Second position of parking-brake rod
- PS: Parking-brake signal
- R1: First flow resistance value
- R2: Second flow resistance value
- RS: Fully-released state
- SS: Service-brake signal

## Claims

1. Electromechanical brake actuator (100, 200, 300), comprising:
- a service-brake unit (102) including:
- a service-brake rod (104), for applying a variable braking force (F) to an external caliper (502);
- a service-actuation unit (106) configured to receive a service-brake signal (SS) and in dependence thereof, to move the service-brake rod (104) to a position (P) between a full braking position (BP) at which a maximum braking force (Fmax) is applied to the caliper (502) and a drive position (DP), at which no braking force (F) is applied to the caliper (502);
**characterized in that** the electromechanical brake actuator (100, 200, 300) further comprises:
- a parking-brake unit (110), including
- a parking-brake rod (112) operatively coupled to the service-brake rod (104) and movable between a first position (P1) in which the parking-brake rod (112) is arranged to lock the service-brake rod (104) in a braking position, preferably the full braking position (BP), and a second position (P2) in which the service-brake rod (104) is released from the braking position (BP) and free to be moved by the service-actuation unit (106); and
a parking-actuation unit (114) comprising a spring element (116) operatively coupled to the parking-brake rod (112) and arranged so that in a fully-compressed state (CS) of the spring element (116), the parking-brake rod (112) is in the second position (P2), and in a fully-released state (RS) of the spring element (116) the parking-brake rod (112) is in the first position (P1), the parking-actuation unit (114), **characterized in that** the electromechanical brake actuator (100, 200, 300) further comprises a hydraulic unit (118) that is operatively coupled to the parking-brake rod and configured to receive a parking-brake signal and in dependence thereof, to lock the parking-brake rod at a given position, and to allow a release of the spring element (116) to the fully-released state (RS).

2. The electromechanical brake actuator (100, 200, 300) of claim 1, wherein the hydraulic unit (118) comprises a hydraulic cylinder (120) including a piston chamber (121) and a piston (122) arranged inside the piston chamber (121), the piston (122) being operatively coupled to the parking-brake rod (112), wherein the hydraulic unit (118) further comprises a first chamber (124) and a second chamber (126a, 126b) in fluid communication with the first chamber (124) via a fluid passage (128), and wherein an electrically controlled valve unit (132) configured to receive the parking-brake signal (PS) is arranged and configured to block and enable a flow (f) of an hydraulic fluid (130) via the fluid passage between the first chamber (124) and the second chamber (126a, 126b).

3. The electromechanical brake actuator (200) of claim 2, wherein the hydraulic cylinder (120) is a double acting cylinder (220), wherein the first chamber (124) and the second chamber (126a) are located inside the double acting cylinder (220) and separated by the piston (122).

4. The electromechanical brake actuator (300) of claim 2, wherein the hydraulic cylinder(120) is a single-acting cylinder (320), wherein the first chamber (124) is located inside the hydraulic cylinder (120) and the second chamber (126b) is a reservoir (126b) arranged outside the hydraulic cylinder (120).

5. The electromechanical brake actuator (100) of any of the preceding claims 2 to 4, wherein the electrically controlled valve unit (132) comprises a manifold valve (134), in particular a 2/2-way solenoid valve (134) being operable in a first state (134.1) in which a first port (134a) of the manifold valve (134) in fluid communication with the first chamber (124) is disconnected from a second port (134b) of the manifold valve (134) in fluid communication with the second chamber (126a, 126b) and therefore a movement of the piston (122) inside the hydraulic cylinder (120) is hindered, and a second state (134.2) in which the first port (134a) is connected to the second port (134b) and therefore a movement of the piston (122) inside the hydraulic cylinder (120) is enabled.

6. The electromechanical brake actuator of claim 5, wherein the first state (134.1) is an unactuated state of the manifold valve (134) and the second state (134.2) is an actuated state of the manifold valve (134).

7. The electromechanical brake actuator (100) of any of the preceding claims 2 to 6, wherein the hydraulic unit (118) further comprises a flow-control unit (136, 138) arranged between the electrically controlled valve unit (132) and the hydraulic cylinder (120) for controlling a flow amount (f) between the first chamber (124) and the second chamber (126a, 126b).

8. The electromechanical brake actuator (100) of claim 7, wherein the flow-control unit (138) is further configured to switch between two flow resistances values (R1, R2).

9. The electromechanical brake actuator (100) of claim 8, wherein the flow-control unit (138) is configured to set a first flow resistance value (R1) to a first flow path (f1) from the first chamber (124) to the second chamber (126a, 126b) and a second flow resistance value (R2) to a second flow path (f2) from the second chamber (126a, 126b) to the first chamber (124).

10. The electromechanical brake actuator (100) of any of the preceding claims, wherein the service-actuation unit (106) is further arranged and configured to compress the spring element (116) and to drive the parking-brake rod (112) to the second position (P2).

11. The electromechanical brake actuator (100) of any of the preceding claims, wherein the hydraulic unit (118) further comprises an emergency-release unit (140, 140a, 140b) that is operatively coupled to the parking-brake rod and configured to drive the parking-brake rod (112) to the second position (P2) independently of the service-actuation unit (106).

12. The electromechanical brake actuator (100) of claim 11, wherein the emergency-release unit (140, 140a, 140b) comprises an emergency-release screw (140a) for moving the parking-brake rod (112) and, optionally, a manual valve actuator (140b) for controlling the hydraulic unit (118) independently of the electric parking-brake signal (PS).

13. An electromechanical brake arrangement (500), comprising:
- an electromechanical brake actuator (100, 200, 300) according to any of the preceding claims;
- a caliper (502) connected to the service-brake rod (104) and configured to apply a braking force (F) to a brake disk (503), the amount of the braking force (F) being dependent on a position (BP, DP) of the service-brake rod (104); and
- a brake control unit (504) in signal communication with the service-actuation unit (106) and the parking-actuation (114) and configured to generate and provide the electric service-brake signal (SS) and the electric parking-brake signal (PS).

14. A commercial vehicle, in particular an electric commercial vehicle (1000), comprising an electromechanical brake arrangement (500) according to claim 12, wherein a respective brake disk (503) is connected to a corresponding wheel (1002) of the vehicle (1000).

## Patentansprüche

1. Elektromechanischer Bremsaktuator (100, 200, 300), umfassend:
- eine Betriebsbremseinheit (102), die Folgendes einschließt:
- eine Betriebsbremsstange (104) zum Anwenden einer variablen Bremskraft (F) auf einen äußeren Bremssattel (502);
- eine Betriebsbetätigungseinheit (106), die konfiguriert ist, um ein Betriebsbremssignal (SS) zu empfangen und in Abhängigkeit davon die Betriebsbremsstange (104) in eine Position (P) zwischen einer Vollbremsposition (BP), in der eine maximale Bremskraft (Fmax) auf den Bremssattel (502) angewendet wird, und einer Antriebsposition (DP), in der keine Bremskraft (F) auf den Bremssattel (502) angewendet wird, zu bewegen;
**dadurch gekennzeichnet, dass** der elektromechanische Bremsaktuator (100, 200, 300) ferner umfasst:
- eine Feststellbremseinheit (110), die Folgendes einschließt
- eine Feststellbremsstange (112), die betriebsmäßig mit der Betriebsbremsstange (104) gekoppelt und zwischen einer ersten Position (P1), in der die Feststellbremsstange (112) so angeordnet ist, dass sie die Betriebsbremsstange (104) in einer Bremsposition, vorzugsweise der Vollbremsposition (BP), arretiert, und einer zweiten Position (P2) beweglich ist, in der die Betriebsbremsstange (104) aus der Bremsposition (BP) gelöst und frei durch die Betriebsbetätigungseinheit (106) bewegt werden kann; und
eine Feststellbetätigungseinheit (114), die ein Federelement (116) umfasst, das betriebsmäßig mit der Feststellbremsstange (112) gekoppelt ist und so angeordnet ist, dass sich die Feststellbremsstange (112) in einem vollständig zusammengedrückten Zustand (CS) des Federelements (116) in der zweiten Position (P2) befindet und sich die Feststellbremsstange (112) in einem vollständig gelösten Zustand (RS) des Federelements (116) in der ersten Position (P1) befindet, die Feststellbetätigungseinheit (114), **dadurch gekennzeichnet, dass** der elektromechanische Bremsaktuator (100, 200, 300) ferner eine Hydraulikeinheit (118) umfasst, die betriebsmäßig mit der Feststellbremsstange gekoppelt und konfiguriert ist, um ein Feststellbremssignal zu empfangen und in Abhängigkeit davon die Feststellbremsstange in einer gegebenen Position zu arretieren und ein Lösen des Federelements (116) in den vollständig gelösten Zustand (RS) zu ermöglichen.

2. Elektromechanischer Bremsaktuator (100, 200, 300) nach Anspruch 1, wobei die Hydraulikeinheit (118) einen Hydraulikzylinder (120) einschließlich einer Kolbenkammer (121) und eines in der Kolbenkammer (121) angeordneten Kolbens (122) umfasst, wobei der Kolben (122) betriebsmäßig mit der Feststellbremsstange (112) gekoppelt ist, wobei die Hydraulikeinheit (118) ferner eine erste Kammer (124) und eine zweite Kammer (126a, 126b) umfasst, die über einen Fluidkanal (128) in Fluidverbindung mit der ersten Kammer (124) stehen, und wobei eine elektrisch gesteuerte Ventileinheit (132), die konfiguriert ist, um das Feststellbremssignals (PS) zu empfangen, zum Blockieren und Ermöglichen einer Strömung (f) eines Hydraulikfluids (130) über den Fluidkanal zwischen der ersten Kammer (124) und der zweiten Kammer (126a, 126b) angeordnet und konfiguriert ist.

3. Elektromechanischer Bremsaktuator (200) nach Anspruch 2, wobei der Hydraulikzylinder (120) ein doppeltwirkender Zylinder (220) ist, wobei die erste Kammer (124) und die zweite Kammer (126a) innerhalb des doppeltwirkenden Zylinders (220) angeordnet und durch den Kolben (122) getrennt sind.

4. Elektromechanischer Bremsaktuator (300) nach Anspruch 2, wobei der Hydraulikzylinder (120) ein einfachwirkender Zylinder (320) ist, wobei sich die erste Kammer (124) innerhalb des Hydraulikzylinders (120) befindet und die zweite Kammer (126b) ein außerhalb des Hydraulikzylinders (120) angeordneter Vorratsbehälter (126b) ist.

5. Elektromechanischer Bremsaktuator (100) nach einem der vorstehenden Ansprüche 2 bis 4, wobei die elektrisch gesteuerte Ventileinheit (132) ein Mehrwegeventil (134), insbesondere ein 2/2-Wege-Magnetventil (134), umfasst, das in einem ersten Zustand (134.1), in dem ein erster Anschluss (134a) des Mehrwegeventils (134), der in Fluidverbindung mit der ersten Kammer (124) steht, von einem zweiten Anschluss (134b) des Mehrwegeventils (134), der in Fluidverbindung mit der zweiten Kammer (126a, 126b) steht, getrennt ist und daher eine Bewegung des Kolbens (122) innerhalb des Hydraulikzylinders (120) verhindert wird, und in einem zweiten Zustand (134.2) betreibbar ist, in dem der erste Anschluss (134a) mit dem zweiten Anschluss (134b) verbunden ist und daher eine Bewegung des Kolbens (122) innerhalb des Hydraulikzylinders (120) ermöglicht wird.

6. Elektromechanischer Bremsaktuator nach Anspruch 5, wobei der erste Zustand (134.1) ein unbetätigter Zustand des Mehrwegeventils (134) und der zweite Zustand (134.2) ein betätigter Zustand des Mehrwegeventils (134) ist.

7. Elektromechanischer Bremsaktuator (100) nach einem der vorstehenden Ansprüche 2 bis 6, wobei die Hydraulikeinheit (118) ferner eine Strömungssteuereinheit (136, 138) umfasst, die zwischen der elektrisch gesteuerten Ventileinheit (132) und dem Hydraulikzylinder (120) angeordnet ist, um eine Strömungsmenge (f) zwischen der ersten Kammer (124) und der zweiten Kammer (126a, 126b) zu steuern.

8. Elektromechanischer Bremsaktuator (100) nach Anspruch 7, wobei die Strömungssteuereinheit (138) ferner konfiguriert ist, um zwischen zwei Strömungswiderstandswerten (R1, R2) umzuschalten.

9. Elektromechanischer Bremsaktuator (100) nach Anspruch 8, wobei die Strömungssteuereinheit (138) konfiguriert ist, um einen ersten Strömungswiderstandswert (R1) für einen ersten Strömungspfad (f1) von der ersten Kammer (124) zur zweiten Kammer (126a, 126b) und einen zweiten Strömungswiderstandswert (R2) für einen zweiten Strömungspfad (f2) von der zweiten Kammer (126a, 126b) zur ersten Kammer (124) einzustellen.

10. Elektromechanischer Bremsaktuator (100) nach einem der vorstehenden Ansprüche, wobei die Betriebsbetätigungseinheit (106) ferner so angeordnet und konfiguriert ist, dass sie das Federelement (116) zusammendrückt und die Feststellbremsstange (112) in die zweite Position (P2) treibt.

11. Elektromechanischer Bremsaktuator (100) nach einem der vorstehenden Ansprüche, wobei die Hydraulikeinheit (118) ferner eine Notentriegelungseinheit (140, 140a, 140b) umfasst, die betriebsmäßig mit der Feststellbremsstange gekoppelt ist und konfiguriert ist, um die Feststellbremsstange (112) unabhängig von der Betriebsbetätigungseinheit (106) in die zweite Position (P2) zu treiben.

12. Elektromechanischer Bremsaktuator (100) nach Anspruch 11, wobei die Notentriegelungseinheit (140, 140a, 140b) eine Notlentriegelungsschraube (140a) zum Bewegen der Feststellbremsstange (112) und optional einen manuellen Ventilaktuator (140b) zum Steuern der Hydraulikeinheit (118) unabhängig vom elektrischen Feststellbremssignal (PS) umfasst.

13. Elektromechanische Bremsanordnung (500), umfassend:
- einen elektromechanischen Bremsaktuator (100, 200, 300) nach einem der vorstehenden Ansprüche;
- einen Bremssattel (502), der mit der Betriebsbremsstange (104) verbunden und konfiguriert ist, um eine Bremskraft (F) auf eine Bremsscheibe (503) anzuwenden, wobei die Höhe der Bremskraft (F) von einer Position (BP, DP) der Betriebsbremsstange (104) abhängt; und
- eine Bremssteuereinheit (504), die in Signalverbindung mit der Betriebsbetätigungseinheit (106) und der Feststellbetätigung (114) steht und konfiguriert ist, um das elektrische Betriebsbremssignal (SS) und das elektrische Feststellbremssignal (PS) zu erzeugen und bereitzustellen.

14. Nutzfahrzeug, insbesondere ein elektrisches Nutzfahrzeug (1000), umfassend eine elektromechanische Bremsanordnung (500) nach Anspruch 12, wobei eine jeweilige Bremsscheibe (503) mit einem entsprechenden Rad (1002) des Fahrzeugs (1000) verbunden ist.

## Revendications

1. Actionneur de frein électromécanique (100, 200, 300), comprenant :
- une unité de frein de service (102) comportant :
- une tige de frein de service (104), pour appliquer une force de freinage variable (F) à un étrier externe (502) ;
- une unité d'actionnement de service (106) conçue pour recevoir un signal de frein de service (SS) et, en fonction de celui-ci, pour déplacer la tige de frein de service (104) vers une position (P) entre une position de freinage complet (BP) au niveau de laquelle une force de freinage maximale (Fmax) est appliquée à l'étrier (502) et une position d'entraînement (DP), au niveau de laquelle aucune force de freinage (F) n'est appliquée à l'étrier (502) ;
**caractérisé en ce que** l'actionneur de frein électromécanique (100, 200, 300) comprend en outre :
- une unité de frein de stationnement (110), comportant
- une tige de frein de stationnement (112) accouplée de manière opérationnelle à la tige de frein de service (104) et pouvant être déplacée entre une première position (P1) dans laquelle la tige de frein de stationnement (112) est agencée pour bloquer la tige de frein de service (104) dans une position de freinage, de préférence la position de freinage complet (BP), et une seconde position (P2) dans laquelle la tige de frein de service (104) est libérée de la position de freinage (BP) et libre d'être déplacée par l'unité d'actionnement de service (106) ; et
une unité d'actionnement de stationnement (114) comprenant un élément ressort (116) accouplé de manière opérationnelle à la tige de frein de stationnement (112) et agencé de sorte que dans un état complètement comprimé (CS) de l'élément ressort (116), la tige de frein de stationnement (112) est dans la seconde position (P2), et dans un état complètement libéré (RS) de l'élément ressort (116), la tige de frein de stationnement (112) est dans la première position (P1), l'unité d'actionnement de stationnement (114), **caractérisé en ce que** l'actionneur de frein électromécanique (100, 200, 300) comprend en outre une unité hydraulique (118) qui est accouplée de manière opérationnelle à la tige de frein de stationnement et conçue pour recevoir un signal de frein de stationnement et, en fonction de celui-ci, pour bloquer la tige de frein de stationnement au niveau d'une position donnée, et pour permettre une libération de l'élément ressort (116) à l'état complètement libéré (RS).

2. Actionneur de frein électromécanique (100, 200, 300) selon la revendication 1, dans lequel l'unité hydraulique (118) comprend un cylindre hydraulique (120) comportant une chambre de piston (121) et un piston (122) agencé à l'intérieur de la chambre de piston (121), le piston (122) étant accouplé de manière opérationnelle à la tige de frein de stationnement (112), dans lequel l'unité hydraulique (118) comprend en outre une première chambre (124) et une seconde chambre (126a, 126b) en communication fluidique avec la première chambre (124) par l'intermédiaire d'un passage de fluide (128), et dans lequel une unité de soupape à commande électrique (132) conçue pour recevoir le signal de frein de stationnement (PS) est agencée et conçue pour bloquer et permettre un écoulement (f) d'un fluide hydraulique (130) par l'intermédiaire du passage de fluide entre la première chambre (124) et la seconde chambre (126a, 126b).

3. Actionneur de frein électromécanique (200) selon la revendication 2, dans lequel le cylindre hydraulique (120) est un cylindre à double action (220), dans lequel la première chambre (124) et la seconde chambre (126a) sont situées à l'intérieur du cylindre à double action (220) et séparées par le piston (122).

4. Actionneur de frein électromécanique (300) selon la revendication 2, dans lequel le cylindre hydraulique (120) est un cylindre à simple action (320), dans lequel la première chambre (124) est située à l'intérieur du cylindre hydraulique (120) et la seconde chambre (126b) est un réservoir (126b) agencé à l'extérieur du cylindre hydraulique (120).

5. Actionneur de frein électromécanique (100) selon l'une quelconque des revendications précédentes 2 à 4, dans lequel l'unité de soupape à commande électrique (132) comprend une soupape de collecteur (134), en particulier une soupape solénoïde 2/2 voies (134) pouvant être opérée dans un premier état (134.1) dans lequel un premier orifice (134a) de la soupape de collecteur (134) en communication fluidique avec la première chambre (124) est déconnecté d'un second orifice (134b) de la soupape de collecteur (134) en communication fluidique avec la seconde chambre (126a, 126b) et, par conséquent, un déplacement du piston (122) à l'intérieur du cylindre hydraulique (120) est entravé, et un second état (134.2) dans lequel le premier orifice (134a) est connecté au second orifice (134b) et par conséquent un déplacement du piston (122) à l'intérieur du cylindre hydraulique (120) est permis.

6. Actionneur de frein électromécanique selon la revendication 5, dans lequel le premier état (134.1) est un état non actionné de la soupape de collecteur (134) et le second état (134.2) est un état actionné de la soupape de collecteur (134).

7. Actionneur de frein électromécanique (100) selon l'une quelconque des revendications précédentes 2 à 6, dans lequel l'unité hydraulique (118) comprend en outre une unité de commande d'écoulement (136, 138) agencée entre l'unité de soupape à commande électrique (132) et le cylindre hydraulique (120) pour commander une quantité d'écoulement (f) entre la première chambre (124) et la seconde chambre (126a, 126b).

8. Actionneur de frein électromécanique (100) selon la revendication 7, dans lequel l'unité de commande d'écoulement (138) est en outre conçue pour commuter entre deux valeurs de résistance à l'écoulement (R1, R2).

9. Actionneur de frein électromécanique (100) selon la revendication 8, dans lequel l'unité de commande d'écoulement (138) est conçue pour régler une première valeur de résistance à l'écoulement (R1) à un premier chemin d'écoulement (f1) de la première chambre (124) à la seconde chambre (126a, 126b) et une seconde valeur de résistance à l'écoulement (R2) à un deuxième chemin d'écoulement (f2) de la seconde chambre (126a, 126b) à la première chambre (124).

10. Actionneur de frein électromécanique (100) selon l'une quelconque des revendications précédentes, dans lequel l'unité d'actionnement de service (106) est en outre agencée et conçue pour comprimer l'élément ressort (116) et pour entraîner la tige de frein de stationnement (112) dans la seconde position (P2).

11. Actionneur de frein électromécanique (100) selon l'une quelconque des revendications précédentes, dans lequel l'unité hydraulique (118) comprend en outre une unité de libération d'urgence (140, 140a, 140b) qui est accouplée de manière opérationnelle à la tige de frein de stationnement et conçue pour entraîner la tige de frein de stationnement (112) vers la seconde position (P2) indépendamment de l'unité d'actionnement de service (106).

12. Actionneur de frein électromécanique (100) selon la revendication 11, dans lequel l'unité de libération d'urgence (140, 140a, 140b) comprend une vis de libération d'urgence (140a) destinée à déplacer la tige de frein de stationnement (112) et, éventuellement, un actionneur de soupape manuelle (140b) destinée à commander l'unité hydraulique (118) indépendamment du signal de frein de stationnement électrique (PS).

13. Agencement de frein électromécanique (500), comprenant :
- un actionneur de frein électromécanique (100, 200, 300) selon l'une quelconque des revendications précédentes ;
- un étrier (502) connecté à la tige de frein de service (104) et conçu pour appliquer une force de freinage (F) à un disque de frein (503), la quantité de la force de freinage (F) étant fonction d'une position (BP, DP) de la tige de frein de service (104) ; et
- une unité de commande de frein (504) en communication de signal avec l'unité d'actionnement de service (106) et l'actionnement de stationnement (114) et conçue pour générer et fournir le signal de frein de service électrique (SS) et le signal de frein de stationnement électrique (PS).

14. Véhicule utilitaire, en particulier véhicule utilitaire électrique (1000), comprenant un agencement de frein électromécanique (500) selon la revendication 12, dans lequel un disque de frein (503) respectif est connecté à une roue correspondante (1002) du véhicule (1000).
